(19) 

Europäisches Patentamt

European Patent Office

Office européen des brevets

(11) EP 2 951 949 B1

(12) **EUROPEAN PATENT SPECIFICATION**

(45) Date of publication and mention of the grant of the patent:
**15.08.2018 Bulletin 2018/33**

(21) Application number: **13704309.7**

(22) Date of filing: **29.01.2013**

(51) Int Cl.:
***H04L 9/32*** *(2006.01)*

(86) International application number:
**PCT/US2013/023627**

(87) International publication number:
**WO 2014/120121 (07.08.2014 Gazette 2014/32)**

(54) **MODIFIED SM2 ELLIPTIC CURVE SIGNATURE ALGORITHM SUPPORTING MESSAGE RECOVERY**

MODIFIZIERTER SM2-SIGNATURALGORITHMUS MIT ELLIPTISCHER KURVE ZUR NACHRICHTENWIEDERHERSTELLUNG

ALGORITHME DE SIGNATURE SUR COURBE ELLIPTIQUE SM2 MODIFIÉ POUR RÉCUPÉRATION DE MESSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.12.2015 Bulletin 2015/50**

(73) Proprietor: **Certicom Corp.**
**Mississauga, Ontario L4W 0B5 (CA)**

(72) Inventor: **CAMPAGNA, Matthew, John**
**Ridgefield, CT 06877 (US)**

(74) Representative: **Hanna Moore + Curley**
**Garryard House**
**25/26 Earlsfort Terrace**
**Dublin 2, D02 PX51 (IE)**

(56) References cited:
**WO-A1-2009/030021**

- **SHEN S ET AL: "SM2 Digital Signature Algorithm; draft-shen-sm2-ecdsa-00.txt", SM2 DIGITAL SIGNATURE ALGORITHM; DRAFT-SHEN-SM2-ECDSA-00.TXT, INTERNET ENGINEERING TASK FORCE, IETF; STANDARDWORKINGDRAFT, INTERNET SOCIETY (ISOC) 4, RUE DES FALAISES CH-1205 GENEVA, SWITZERLAND, 24 October 2011 (2011-10-24), pages 1-16, XP015078799, [retrieved on 2011-10-24]**
- **LEON A PINTSOV AND SCOTT A VANSTONE: "Postal Revenue Collection in the Digital Age", FINANCIAL CRYPTOGRAPHY,, 1 January 2000 (2000-01-01), pages 105-120, XP008133041, DOI: 10.1007/3-540-45472-1_8**

EP 2 951 949 B1

**Description**

FIELD

The present disclosure is directed to a method by which the Chinese State Encryption Management Bureau's SM2 Elliptic Curve Signature Algorithm is modified to a signature scheme that offers partial message recovery, and lowers the signature size for a given cryptographic strength.

BACKGROUND

Signature schemes are designed to be the digital equivalent of handwritten signatures. They are used to provide authentication, data-integrity, and non-repudiation. A signature scheme has a signer $A$, who intends to send a message $M$, to one or more recipients in an authentic manner. Signature schemes primarily include four basic algorithms: parameter generation or setup, key generation, signature generation, and signature verification.

A digital signature provides integrity and authenticity for messages, and is the only security service specified by the Near Field Communication (NFC) forum. The goal is to avoid tampering with a message (integrity) and to have some sort of proof that the message was authenticated or "digitally signed" by a trusted part (authenticity).

Given that digital signatures can provide integrity, authenticity, and confidentiality, they are extremely versatile and can accommodate almost any application scenario. There are two well known digital signature schemes that have withstood the test of time. The RSA scheme, which is based on the problem of factoring larger integers, and elliptic curve cryptography (EEC), which is based on the intractability of computing discrete logarithms for elliptic curve groups.

The Chinese State Encryption Management Bureau (SEMB) published a series of elliptic curve cryptographic algorithms called the SM2 Elliptic Curve Signature Algorithm (SM2-ECSA). The SM2-ECSA digital signature scheme is similar to the Nyberg-Rueppel digital signature scheme described in IEEE 1363-2000, sections 7.2.5 and 7.2.6. A variant of the Nyberg-Rueppel digital signature scheme known as the Elliptic Curve Pinstov-Vanstone Signature (ECPVS) scheme is also standardized in ANSI X9.92. WO 2009/030021 relates to an improvement of ECPVS where message recovery is restricted to a specified entity. The SM2-ECSA digital signature scheme differs from the Nyberg-Rueppel scheme by a modification of the signature generation formula. It deviates from traditional signature schemes in the inclusion of other information of the user. This other information of the user is incorporated into the message being signed. The SM2-ECSA specification fails to name this other information of the user, and so for the sake of simplicity it is referred to herein as the *identity hash value.*

The SM2-ECSA digital signature scheme setup is consistent with other digital signature schemes. However, the SM2 adds to the traditional digital signature schemes in regards to distinguished identifiers and the creation of the identity hash value. The SM2-ECSA digital signature algorithm uses additional information, the so-called *distinguishing identifiers,* as well as elliptic curve parameters and the public key of the signer. The agreement on how these are to be formed is part of a scheme setup and requires as input the curve parameters, an identifier of the signer, a base point $G$ of the elliptic curve, and a public key of the signer $P_A$. The algorithm also assumes a consistently agreed upon hash function as specified in the scheme setup.

SUMMARY

According to a first aspect there is provided a digital signature generation method for a transmitting-entity according to claim 1.

In a second aspect there is provided a digital signature verification method for a receiving-entity according to claim 6.

In further aspects, there are provided apparatus according to each of claims 9 and 10; as well non-transitory computer-readable media having stored thereon respective programs that when executed by a computer cause the computer to execute the steps of claims 11 or 12.

BRIEF DESCRIPTION OF THE DRAWINGS

A more complete appreciation of the embodiments described therein, and many of the attendant advantages thereof will be readily obtained as the same becomes better understood by reference to the following detailed description when considered in connection with the accompanying drawings, wherein:

FIG. 1 depicts a system diagram of the encryption and decryption process of the modified SM2-ECSA process;
FIG. 2 depicts the steps taken to derive the identity hash value;
FIG. 3 depicts the modified SM2-ECSA signature primitive algorithm used to create a digital signature at the transmitting-entity;

FIG. 4 depicts the modified SM2-ECSA verification primitive to verify and recover a part of the signed message at the receiving-entity; and

FIG. 5 shows a block diagram of a computer according to exemplary embodiments.

DETAILED DESCRIPTION

In the present embodiments, a modification to the SM2 Elliptic Curve Signature Algorithm is presented to create a variant that provides partial message recovery. Further, the modified algorithm also lowers the signature size for a given cryptographic strength, which it achieves by modifying the signature generation primitive to compute a key derived from an ephemeral signing key and a multiple of the signer's private key. This is based upon the verification routine being capable of recovering the public signing ephemeral key summed with a multiple of the signer's public key.

The present disclosure describes the modified SM2 Elliptic Curve Signature Algorithm, which provides partial message recovery and lowers the signature size for a given cryptographic strength. In general, for a given encryption scheme with a security strength denoted by S, the signature size of the encryption scheme is 4*S. The modified SM2 Elliptic Curve Signature Algorithm can reduce this signature size to as much as 2*S. Specifically, the modified SM2 Elliptic Curve Signature Algorithm achieves a 50% reduction in the signature size as compared to traditional encryption algorithms. Signature schemes such as the SM2-ECSA are designed to be the digital equivalent of handwritten signatures. They are used to provide authentication of data, and the signature scheme incorporates a signer $A$ who intends or is challenged to send a particular message $M$, to one or more recipients in an authentic fashion.

A digital signature is a value produced by the message sender to bind the message data to the sender's identity and provide a means of verifying the integrity of the message to detect tampering. The modified SM2-ECSA algorithm uses the private key of the sender to create an encrypted version of the plain text. Sender $A$'s public key along with the identity hash value is used to verify the signature by the recipient. Digital signatures are used to ensure the message recipient that the message originated from the identified sender and that the message contents have not been altered since they have been signed by the sender. The public key can be distributed openly to encrypt messages and to verify digital signatures, but the private key should be carefully guarded by its owner. This is necessary because the private key is used to prove the identity of the certificate subject and to decrypt messages that are intended for that subject.

In what follows, the system diagram of the encryption and decryption process of the modified ECSA algorithm and its scheme setup is described. Next, the signature primitive algorithm used by the transmitting-entity for generating digital signatures is explained. Finally, the verification primitive algorithm used by the receiving-entity for verifying the signed message is described.

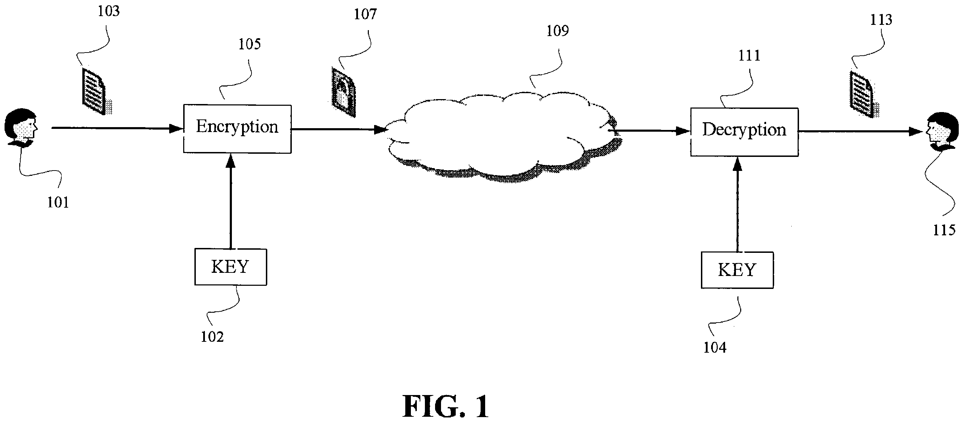

FIG. 1 depicts a system diagram of the encryption (on the transmitting-entity side) and decryption process (on the receiving-entity side) that employs the modified ECSA algorithm. User A (101) uses its private key denoted by $d_A$ (102) to encrypt the message of the plain text (103) in the signature primitive encryption algorithm (105) to create an enciphered text (107). The enciphered text (107), on transmission through a communication medium (109) is then received by the receiving-entity, user B (115). Note that the communication medium (109) can be a wireless or wired medium, ranging from a single point-to-point link, or a local/wide area communication network. The decryption of enciphered text (107) takes place in the decryption unit (111), wherein the modified SM2-ECSA verification primitive verifies the original signed message. The key used for decryption in (104) is A's public key (denoted by $P_A$) and the identity hash value ($Z_A$, to be described later) of the alleged signer $A$. In doing so, the original plain text (103) is replicated (113) to be delivered in an authentic manner to the recipient, user B.

A basic description of the modified SM2-ECSA algorithm, including the scheme setup, key generation, identity hash value generation, the signature primitive algorithm, and the signature verification algorithm is now presented.

The modified SM2-ECSA algorithm contains a preamble that indicates other elements of a traditional setup that must be agreed upon. The cryptographic components for an elliptic field $F_p$, wherein p is a prime number can be defined as follows:

(1) The elliptic curve parameters comprise of a tuple ($p, a, b, G, n, h$) wherein $p$ is an integer specifying the finite field $F_p$; $a, b$ are the field elements; $G$ is the base point; $n$ is the order of $G$, and $h$ is the cofactor of $n$. Note that when $p=2^m$, an irreducible polynomial determines and reduces the elements of the field $F_2{}^m$ where the two elements $a, b \in F_p$ define an equation of an elliptic curve $E[F_p]$, with a base point $G=(x_G, y_G)$ of order n. Note that an elliptic curve domain parameter tuple for a field defined for the binary case can be described in a similar manner.

(2) The hash functions are $H_{256}$ and $H_v$.

(3) An agreement on how the identity hash value is to be derived.

Note that the SM2-ECSA scheme setup is consistent with digital signature schemes, but adds to those setup schemes with respect to the distinguished identifiers and the creation of the identity hash value. The key generation phase generates entity *A*'s key pair, which includes a private key of user A ($d_A$) and the public key of user A ($P_A$). Note that $P_A = d_A G = (x_A, y_A)$.

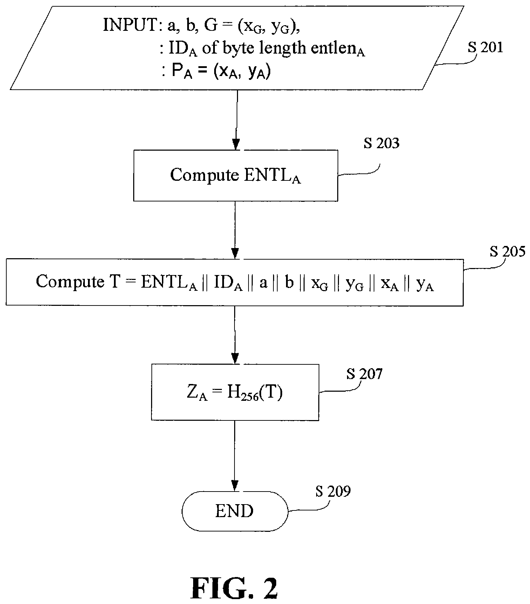

FIG. 2 illustrates the steps taken in the modified SM2-ECSA algorithm to derive the identity hash value ($Z_A$) of the signer (user A).

In step S201, $Z_A$ is computed using the elliptic curve parameters (*a, b, G*), the public key ($P_A$) of the signer, and a distinguishing identifier, $ID_A$, of byte-length represented by *entlen*$_A$.

In step S203, a two-byte string formed from the integer *entlen*$_A$ and represented as $ENTL_A$ is computed.

In step S205, a byte string T is computed as follows:

$$T = ENTL_A \| ID_A \| a \| b \| x_G \| y_G \| x_A \| y_A \qquad (1)$$

wherein the $\|$ sign indicates concatenation.

In step S207, the identity hash value ($Z_A$) is computed as the hash function $H_{256}(T)$.

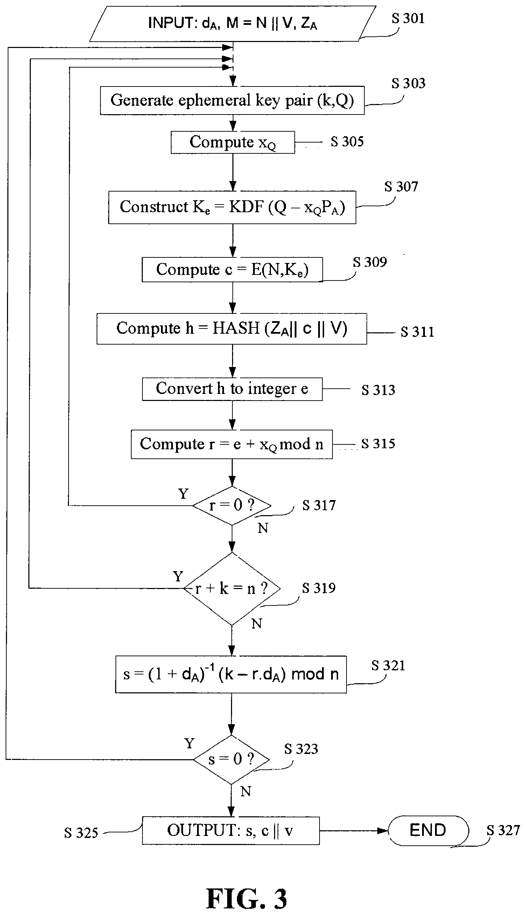

FIG. 3 illustrates the modified SM2-ECSA signature primitive algorithm used by the transmitting-entity.

In step S301, the input to the algorithm includes A's private key ($d_A$), a message M=N$\|$V, and the identity hash value ($Z_A$) of the signer. Note that N and V are the hidden and visible parts of the message respectively.

In step S303, an ephemeral key pair (k, Q) is generated.

In step S305, the integer conversion of the x-coordinate of Q, denoted by $x_Q$ is computed.

In step S307, an encryption key ($K_e$) is computed as follows:

$$K_e = KDF(Q - x_Q P_A) \qquad (2)$$

where KDF is a key derivation function that takes as input a point, and possibly other information, and generates the encryption key.

In step S309, the ciphertext c is computed as follows:

$$c = E(N, K_e) \qquad (3)$$

wherein E is a suitable encryption scheme that takes as input plaintext and the encryption key and produces the ciphertext.

In step S311, the cofactor h is computed as a hash value of the concatenation of the parameters: identity hash value, ciphertext, and the visible part of the message. Specifically, the cofactor is computed as follows:

$$h = Hash(Z_A\|c\|V) \qquad (4)$$

Note that the *Hash* function should be such that it could incorporate additional input information.

In step S313, the cofactor *h* is converted to an integer *e.*

In step S315, r, the signature component value is computed as follows:

$$r = e + x_Q \bmod n \qquad (5)$$

In step S317, the process checks if r is equal to zero. If so, the algorithm loops back to step S303, wherein a new ephemeral key pair is generated. If r≠0 in step S317, the algorithm proceeds to step S319, in which the process checks if the value of r+k is equal to m. If so, the algorithm once again loops back to step S303 to generate a new ephemeral key pair (k, Q). Otherwise, the algorithm proceeds to step S321, in which the signature key, *s,* is computed as follows:

$$s = (1 + d_A)^{-1}(k\text{-}r{\cdot}d_A) \bmod n \qquad (6)$$

In step S323, a final check is made to determine if s is equal to zero. If so, the process returns to step S303 to generate a new ephemeral key pair. Otherwise if s is not equal to zero, the algorithm outputs the value of *s* and *c* to be used to sign the message M as s, c$\|$V.

Next, the SM2-ECSA verification primitive algorithm (used by the receiving-entity) which is implemented in block 111 on the recipient side is described.

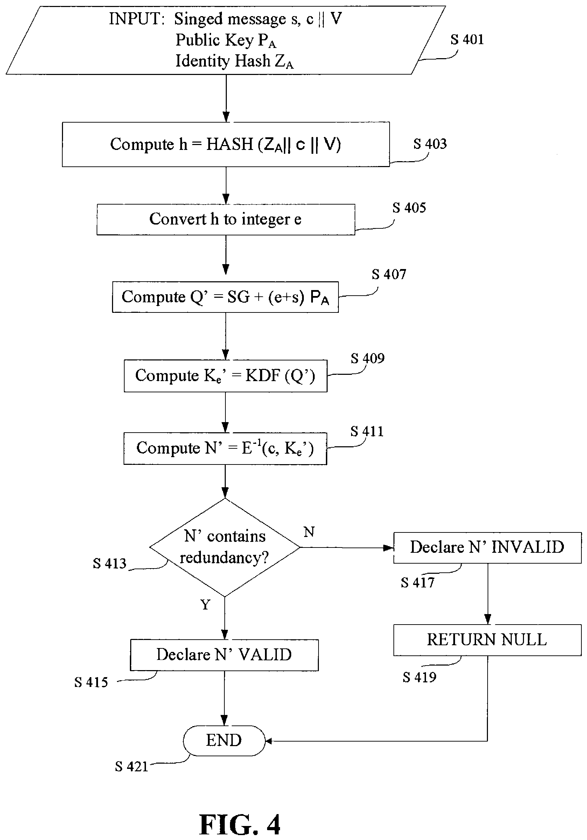

As shown in FIG. 4, in step S401 the signed message s, c‖V, the public key $P_A$, and the identity hash value $Z_A$ are inputs to the algorithm.

In step S403, the cofactor h, is computed with the same hash function as that used in the signature generation scheme and additional input information as follows:

$$h = \text{HASH} (Z_A \parallel c \parallel V) \qquad (7)$$

In step S405, h is converted to its integer value represented by parameter e.

In step 407, Q' is computed as follows:

$$Q' = sG + (e + s) P_A \qquad (8)$$

In step S409, $K_e$'=KDF(Q') is computed. Note that in computing $K_e$', the same key derivation function used in the signature generation algorithm is used, including the same additional information.

In step S411, the hidden message encoded in the signature, N', is computed as follows:

$$N' = E^{-1}(c, \ K_e') \qquad (9)$$

In step S413, a check is made to determine if N' contains redundancy. If so, in step S415, N' is declared valid and the process ends successfully. If N' does not contain the necessary redundancy in step S417 N' is declared invalid, and in step S419, a NULL is returned and the process ends.

The correctness of the above embodiments is illustrated by showing that the derived value Q' in the verification primitive is equal to the computed value $Q-x_QP_A$ in the signature primitive:

$$\begin{aligned}
Q' &= sG + (e + s) P_A \\
&= sG + (r - x_Q + s) P_A \\
&= (s + s \cdot d_A + r \cdot d_A)G - x_Q P_A \\
&= kG - x_Q P_A \\
&= Q - x_Q P_A \qquad (10)
\end{aligned}$$

In the above embodiments the proposed SM2 modified elliptic curve signature algorithm provides partial message recovery and lowers the signature size for a given cryptographic strength. The embodiments achieve this by modifying the signature generation parameter to compute a key derived from the ephemeral signing key and a multiple of the signer's public key. The disclosed embodiments are based on the verification described above, specifically by recovering the public signing ephemeral key summed with the multiple of the signer's public key. It should be noted, however, that the strict concatenation into the hash function in the signature and verification primitive can be relaxed to be any input of the three variables c, $Z_A$, and V, as long as it is done the same way in the signing and verifying steps.

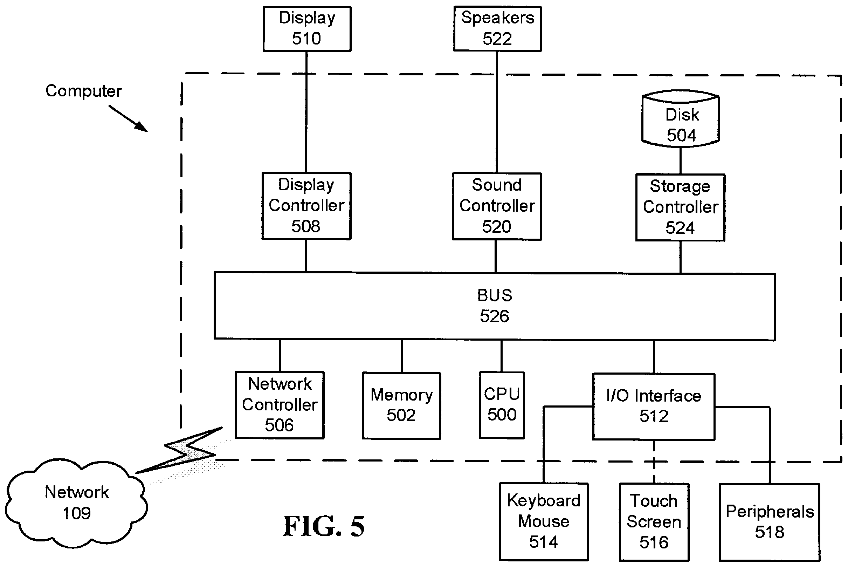

The signature and the verification algorithms described above can be implemented in units 105 and 111 of FIG. 1 respectively, by one or more computers and/or one or more specialized circuits. A hardware description of such a computer is described with reference to FIG. 5.

In FIG. 5 the computer includes a CPU 500 which may perform the processes described above.

The process data and instructions may be stored in memory 502. These processes and instructions may also be stored on a storage medium disk 504 such as a hard drive (HDD) or portable storage medium or may be stored remotely. Further, the claimed advancements are not limited by the form of the computer-readable media on which the instructions of the inventive process are stored. For example, the instructions may be stored on CDs, DVDs, in FLASH memory, RAM, ROM, PROM, EPROM, EEPROM, hard disk or any other information processing device with which the computer communicates, such as a server.

Further, the claimed advancements may be provided as a utility application, background daemon, or component of an operating system, or combination thereof, executing in conjunction with CPU 500 and an operating system such as Microsoft Windows 7, UNIX, Solaris, LINUX, Apple MAC-OS and other systems known to those skilled in the art.

CPU 500 may be a Xenon or Core processor from Intel of America or an Opteron processor from AMD of America, or may be other processor types that would be recognized by one of ordinary skill in the art. Alternatively, the CPU 500 may be implemented on an FPGA, ASIC, PLD or using discrete logic circuits, as one of ordinary skill in the art would recognize. Further, CPU 500 may be implemented as multiple processors cooperatively working in parallel to perform the instructions of the inventive processes described above.

The computer in FIG. 6 also includes a network controller 506, such as an Intel Ethernet PRO network interface card from Intel Corporation of America, for interfacing with network 599. As can be appreciated, the network 599 can be a public network, such as the Internet, or a private network such as an LAN or WAN network, or any combination thereof and can also include PSTN or ISDN sub-networks. The network 599 can also be wired, such as an Ethernet network, or can be wireless such as a cellular network including EDGE, 3G and 4G wireless cellular systems. The wireless network can also be WiFi, Bluetooth, or any other wireless form of communication that is known.

One embodiment of the computer may be used by the transmitting entity 101, to process the modified ECSA encryption signature algorithm of unit 105 in the CPU 500, and another embodiment of the computer may be used by the receiving entity to process the modified ECSA decryption algorithm 111. The network controller 506 may be used to establish a communication channel between the two parties, possibly through the network 109.

The computer further includes a display controller 508, such as a NVIDIA GeForce GTX or Quadro graphics adaptor from NVIDIA Corporation of America for interfacing with display 510, such as a Hewlett Packard HPL2445w LCD monitor. A general purpose I/O interface 512 interfaces with a keyboard and/or mouse 514 as well as a touch screen panel 516 on or separate from display 510. General purpose I/O interface also connects to a variety of peripherals 518 including printers and scanners, such as an OfficeJet or DeskJet from Hewlett Packard.

A sound controller 520 is also provided in the computer, such as Sound Blaster X-Fi Titanium from Creative, to interface with speakers/microphone 522 thereby providing sounds and/or music. The speakers/microphone 522 can also be used to accept dictated words as commands for controlling the computer or for providing location and/or property information with respect to the target property.

The general purpose storage controller 524 connects the storage medium disk 504 with communication bus 526, which may be an ISA, EISA, VESA, PCI, or similar, for interconnecting all of the components of the computer. A description of the general features and functionality of the display 510, keyboard and/or mouse 514, as well as the display controller 508, storage controller 524, network controller 506, sound controller 520, and general purpose I/O interface 512 is omitted herein for brevity as these features are known.

In the above description, any processes, descriptions or blocks in flowcharts should be understood to represent modules, segments, or portions of code that include one or more executable instructions for implementing specific logical functions or steps in the process, and alternate implementations are included within the scope of the exemplary embodiments of the present advancements in which functions may be executed out of order from that shown or discussed, including substantially concurrently or in reverse order, depending upon the functionality involved, as would be understood by those skilled in the art.

While certain embodiments have been described, these embodiments have been presented by way of example only, and are not intended to limit the scope of the inventions. Indeed, the novel methods, apparatuses and systems described herein may be embodied in a variety of other forms; furthermore, various omissions, substitutions and changes in the form of the methods, apparatuses and systems described herein may be made without departing from the scope of the claims.

## Claims

1. A digital signature generation method for a transmitting-entity, comprising:

   partitioning a message to be transmitted into a first portion (N) and a second portion (V);
   generating an ephemeral secret, k, and a corresponding ephemeral key, Q; calculating an encryption key ($K_e$) based on the generated ephemeral key (Q) and a public key of the transmitting entity, $P_A$, by the equation:

   $$K_e = KDF(Q\text{-}x_Q P_A),$$

   wherein KDF is a key derivation function and $x_Q$ is an integer conversion of the x-coordinate of the ephemeral public key Q; computing a ciphertext (c) by encrypting the first portion (N) of the message using the calculated

encryption key ($K_e$);
computing a hash value (h) by applying a first hash function to a concatenation of an identity hash value ($Z_A$), the computed ciphertext (c), and the second portion (V) of the message;
calculating a signature keys by the equation:

$$s = (1 + d_A)^{-1}(k\text{-}r{\cdot}d_A) \bmod n$$

wherein $d_A$ is the private key of the transmitting-entity, n is the order of the base point of the elliptic curve, and r is a first signature component calculated by the equation:

$$r = e + x_Q \bmod n$$

wherein e is an integer value derived from the hash value h; and
outputting an enciphered message that includes the calculated signature key (s), the computed ciphertext (c), and the second portion (V) of the message.

2. The digital signature generation method of claim 1, further comprising:
calculating the identity hash value by

forming a two-byte string of a distinguishing identifier;
forming a byte string of the distinguishing identifier, the public key, and a set of elliptic curve parameters; and
computing the identity hash value by applying a second hash function to the byte string.

3. The digital signature generation method of claim 1, wherein the step of calculating the ciphertext, c, comprises calculating c by the equation:

$$c=E(N, K_e),$$

wherein E is an encryption scheme, N is the first portion of the message to be transmitted, and $K_e$ is the encryption key.

4. The digital signature generation method of claim 1, wherein the step of calculating the hash value, h, comprises calculating h by the equation:

$$h= Hash(Z_A\|c\|V),$$

wherein $Z_A$ is the identity hash value, c is the ciphertext, V is the second portion of the message to be transmitted, and Hash is the first hash function.

5. A digital signature verification method for a receiving-entity, comprising:

receiving an enciphered message that includes a signature key (s), a ciphertext (c), and a second portion (V) of a message;
computing a hash value (h) by applying a first hash function to a concatenation of an identity hash value ($Z_A$), the received ciphertext (c), and the received second portion (V) of the message;
computing an ephemeral key (Q') based on a public key ($P_A$), the received signature key (s), and the computed hash value (h) by the equation:

$$Q' = sG + (e + s) P_A,$$

wherein s is the signature key, $P_A$ is the public key, e is the hash value expressed as an integer, and G is a base point of an elliptic curve;
computing a decryption key ($K_e'$) based on the computed ephemeral key (Q'); calculating a first portion (N') of the message by decrypting the received ciphertext (c) using the computed decryption key ($K_e$'); and
checking that the calculated first portion of the message has necessary redundancy to verify the message.

6. The digital signature verification method of claim 5, wherein the step of computing the decryption key, $K_e$', comprises calculating the decryption key by the equation:

$$K_e' = KDF(Q'),$$

wherein KDF is a key derivation function, and Q' is the ephemeral key.

7. The digital signature verification method of claim 5, wherein the step of computing the first portion of the message, N', comprises calculating the first portion by the equation:

$$N' = E^{-1}(c, K_e'),$$

wherein c is the received ciphertext, $K_e$' is the computed decryption key, and $E^{-1}$ is a decryption scheme.

8. A digital signature generation apparatus, comprising: a processor configured to:

partition a message to be transmitted into a first portion (N) and a second portion (V);
generate an ephemeral secret, k, and a corresponding ephemeral key, Q;
calculate an encryption key ($K_e$) based on the generated ephemeral key (Q) and a public key of the transmitting entity, $P_A$, by the equation: $K_e = KDF(Q - x_Q P_A)$, wherein KDF is a key derivation function and $x_Q$ is an integer conversion of the x-coordinate of the ephemeral public key Q;
compute a ciphertext (c) by encrypting the first portion (N) of the message using the calculated encryption key ($K_e$);
compute a hash value (h) by applying a first hash function to a concatenation of an identity hash value ($Z_A$), the computed ciphertext (c), and the second portion (V) of the message;
calculate a signature keys by the equation:

$$s = (1 + d_A)^{-1}(k - r \cdot d_A) \bmod n$$

wherein $d_A$ is the private key of the transmitting-entity, n is the order of the base point of the elliptic curve, and r is a first signature component calculated by the equation:

$$r = e + x_Q \bmod n$$

wherein e is an integer value derived from the hash value h; and
output an enciphered message that includes the calculated signature key (s), the computed ciphertext (c), and the second portion (V) of the message.

9. A digital signature verification apparatus, comprising: a processor configured to:

receive an enciphered message that includes a signature keys, a ciphertext (c), and a second portion (V) of a message;
compute a hash value (h) by applying a first hash function to a concatenation of an identity hash value ($Z_A$), the received ciphertext (c), and the received second portion (V) of the message;
compute an ephemeral key (Q') based on a public key ($P_A$), the received signature key (s), and the computed hash value (h) by the equation:

$$Q' = sG + (e + s) P_A,$$

wherein s is the signature key, $P_A$ is the public key, e is the hash value expressed as an integer, and G is a base point of an elliptic curve;
compute a decryption key ($K_e$') based on the computed ephemeral key (Q');
calculate a first portion (N') of the message by decrypting the received ciphertext (c) using the computed decryption key ($K_e$'); and
check that the calculated first portion of the message has necessary redundancy to verify the message.

10. A computer-readable medium having stored thereon a program that when executed by a computer causes the computer to execute the steps of the method of claim 1.

11. A computer-readable medium having stored thereon a program that when executed by a computer causes the computer to execute the steps of the method of claim 5.

**Patentansprüche**

1. Verfahren zum Erzeugen einer digitalen Signatur für eine Sendeentität, umfassend folgende Schritte:

Aufteilen einer zu sendenden Nachricht in einen ersten Abschnitt (N) und einen zweiten Abschnitt (V);
Erzeugen eines ephemeren Geheimnisses, k, und eines entsprechenden ephemeren Schlüssels, Q;
Berechnen eines Verschlüsselungsschlüssels ($K_e$) basierend auf dem erzeugten ephemeren Schlüssel (Q) und einem öffentlichen Schlüssel der Sendeentität, $P_A$, durch die Gleichung:

$$K_e = KDF(Q-x_Q P_A),$$

wobei KDF eine Schlüsselableitungsfunktion ist und $x_Q$ eine Ganzzahlkonvertierung der x-Koordinate des ephemeren öffentlichen Schlüssels Q ist;
Berechnen eines Chiffretextes (c) durch Verschlüsseln des ersten Abschnitts (N) der Nachricht unter Verwendung des berechneten Verschlüsselungsschlüssels ($K_e$);
Berechnen eines Hash-Wertes (h) durch Anwenden einer ersten Hash-Funktion auf eine Verkettung eines Identitäts-Hash-Wertes ($Z_A$), des berechneten Chiffretextes (c) und des zweiten Abschnitts (V) der Nachricht;
Berechnen eines Signaturschlüssels s durch die Gleichung:

$$s = (1 + d_A)^{-1}(k-r \cdot d_A) \bmod n,$$

wobei $d_A$ der private Schlüssel der Sendeeinheit ist, n die Ordnung des Basispunktes der elliptischen Kurve ist, und r eine erste Signaturkomponente ist, die durch die folgende Gleichung berechnet wird:

$$r = e + x_Q \bmod n,$$

wobei e ein Ganzzahlwert ist, der von dem Hash-Wert h abgeleitet wird;
Ausgeben einer chiffrierten Nachricht, die den berechneten Signaturschlüssel (s), den berechneten Chiffretext (c) und den zweiten Abschnitt (V) der Nachricht umfasst.

2. Verfahren zum Erzeugen einer digitalen Signatur nach Anspruch 1, ferner umfassend folgende Schritte:
Berechnen des Identitäts-Hash-Wertes durch

Bilden einer Zwei-Byte-Zeichenkette einer charakteristischen Kennung;
Bilden einer Byte-Zeichenkette der charakteristischen Kennung, des öffentlichen Schlüssels und eines Satzes von elliptischen Kurvenparametern; und
Berechnen des Identitäts-Hash-Wertes durch Anwenden einer zweiten Hash-Funktion auf die Byte-Zeichenkette.

3. Verfahren zum Erzeugen einer digitalen Signatur nach Anspruch 1, wobei der Schritt des Berechnens des Chiffretextes, c, das Berechnen von c durch die folgende Gleichung umfasst:

$$c = E(N, K_e),$$

wobei E ein Verschlüsselungsschema ist, N der erste Abschnitt der zu sendenden Nachricht ist, und $K_e$ der Verschlüsselungsschlüssel ist.

4. Verfahren zum Erzeugen einer digitalen Signatur nach Anspruch 1, wobei der Schritt des Berechnens des Hash-Wertes, h, das Berechnen von h durch die folgende Gleichung umfasst:

$$h = Hash(Z_A \| c \| V),$$

wobei $Z_A$ der Identitäts-Hash-Wert ist, c der Chiffretext ist, V der zweite Abschnitt der zu sendenden Nachricht ist, und Hash die erste Hash-Funktion ist.

5. Verfahren zum Verifizieren einer digitalen Signatur für eine Empfangsentität, umfassend folgende Schritte:

Empfangen einer chiffrierten Nachricht, die einen Signaturschlüssel (s), einen Chiffretext (C) und einen zweiten Abschnitt (V) einer Nachricht umfasst;
Berechnen eines Hash-Wertes (h) durch Anwenden einer ersten Hash-Funktion auf eine Verkettung eines Identitäts-Hash-Wertes ($Z_A$), des empfangenen Chiffretextes (c) und des empfangenen zweiten Abschnitts (V) der Nachricht;
Berechnen eines ephemeren Schlüssels (Q') basierend auf einem öffentlichen Schlüssel ($P_A$), dem empfangenen Signaturschlüssel (s) und dem berechneten Hash-Wert (h) durch die Gleichung:

$$Q' = sG + (e+s)P_A,$$

wobei s der Signaturschlüssel ist, $P_A$ der öffentliche Schlüssel ist, e der Hash-Wert ist, der als Ganzzahl ausgedrückt ist, und G ein Basispunkt einer elliptischen Kurve ist;
Berechnen eines Entschlüsselungsschlüssels ($K_e$') basierend auf dem berechneten ephemeren Schlüssel (Q');
Berechnen eines ersten Abschnitts (N') der Nachricht durch Entschlüsseln des empfangenen Chiffretextes (c) unter Verwendung des berechneten Entschlüsselungsschlüssels ($K_e$'); und
Überprüfen, dass der berechnete erste Abschnitt der Nachricht eine notwendige Redundanz aufweist, um die Nachricht zu verifizieren.

6. Verfahren zum Verifizieren einer digitalen Signatur nach Anspruch 5, wobei der Schritt des Berechnens des Entschlüsselungsschlüssels, $K_e$', das Berechnen des Entschlüsselungsschlüssels durch die folgende Gleichung umfasst:

$$K_e' = KDF(Q'),$$

wobei KDF eine Schlüsselableitungsfunktion ist und Q' der ephemere Schlüssel ist.

7. Verfahren zum Verifizieren einer digitalen Signatur nach Anspruch 5, wobei der Schritt des Berechnens des ersten Abschnitts der Nachricht, N', das Berechnen des ersten Abschnitts durch die folgende Gleichung umfasst:

$$N' = E^{-1}(c, K_e'),$$

wobei c der empfangene Chiffretext ist, $K_e$' der berechnete Entschlüsselungsschlüssel ist, und $E^{-1}$ ein Entschlüsselungsschema ist.

8. Gerät zum Erzeugen einer digitalen Signatur, umfassend:

einen Prozessor, der konfiguriert ist zum:

Aufteilen einer zu sendenden Nachricht in einen ersten Abschnitt (N) und einen zweiten Abschnitt (V);
Erzeugen eines ephemeren Geheimnisses, k, und eines entsprechenden ephemeren Schlüssels, Q;
Berechnen eines Verschlüsselungsschlüssels ($K_e$) basierend auf dem erzeugten ephemeren Schlüssel (Q) und einem öffentlichen Schlüssel der Sendeentität, $P_A$, durch die Gleichung:

$$K_e = KDF(Q-x_Q P_A),$$

wobei KDF eine Schlüsselableitungsfunktion ist und $x_Q$ eine Ganzzahlkonvertierung der x-Koordinate des ephemeren öffentlichen Schlüssels Q ist;
Berechnen eines Chiffretextes (c) durch Verschlüsseln des ersten Abschnitts (N) der Nachricht unter Verwendung des berechneten Verschlüsselungsschlüssels ($K_e$);
Berechnen eines Hash-Wertes (h) durch Anwenden einer ersten Hash-Funktion auf eine Verkettung eines Identitäts-Hash-Wertes ($Z_A$), des berechneten Chiffretextes (c) und des zweiten Abschnitts (V) der Nachricht;
Berechnen eines Signaturschlüssels s durch die Gleichung:

$$s = (1 + d_A)^{-1}(k-r \cdot d_A) \bmod n,$$

wobei $d_A$ der private Schlüssel der Sendeeinheit ist, n die Ordnung des Basispunktes der elliptischen Kurve ist, und r eine erste Signaturkomponente ist, die durch die folgende Gleichung berechnet wird:

$$r = e + x_Q \bmod n,$$

wobei e ein Ganzzahlwert ist, der von dem Hash-Wert h abgeleitet wird;
Ausgeben einer chiffrierten Nachricht, die den berechneten Signaturschlüssel (s), den berechneten Chiffretext (c) und den zweiten Abschnitt (V) der Nachricht umfasst.

9. Gerät zum Verifizieren einer digitalen Signatur, umfassend:

einen Prozessor, der konfiguriert ist zum:

Empfangen einer chiffrierten Nachricht, die einen Signaturschlüssel (s), einen Chiffretext (C) und einen zweiten Abschnitt (V) einer Nachricht umfasst;
Berechnen eines Hash-Wertes (h) durch Anwenden einer ersten Hash-Funktion auf eine Verkettung eines Identitäts-Hash-Wertes ($Z_A$), des empfangenen Chiffretextes (c) und des empfangenen zweiten Abschnitts (V) der Nachricht;
Berechnen eines ephemeren Schlüssels (Q') basierend auf einem öffentlichen Schlüssel ($P_A$), dem empfangenen Signaturschlüssel (s) und dem berechneten Hash-Wert (h) durch die Gleichung:

$$Q' = sG + (e+s)P_A,$$

wobei s der Signaturschlüssel ist, $P_A$ der öffentliche Schlüssel ist, e der Hash-Wert ist, der als Ganzzahl ausgedrückt ist, und G ein Basispunkt einer elliptischen Kurve ist,

Berechnen eines Entschlüsselungsschlüssels ($K_e'$) basierend auf dem berechneten ephemeren Schlüssel (Q');
Berechnen eines ersten Abschnitts (N') der Nachricht durch Verschlüsseln des empfangenen Chiffretextes (c) unter Verwendung des berechneten Entschlüsselungsschlüssels ($K_e'$); und
Überprüfen, dass der berechnete erste Abschnitt der Nachricht eine notwendige Redundanz aufweist, um die Nachricht zu verifizieren.

10. Computerlesbares Medium, auf dem ein Programm gespeichert ist, das, wenn es durch einen Computer ausgeführt wird, bewirkt, dass der Computer die Schritte des Verfahrens nach Anspruch 1 ausführt.

11. Computerlesbares Medium, auf dem ein Programm gespeichert ist, das, wenn es durch einen Computer ausgeführt wird, bewirkt, dass der Computer die Schritte des Verfahrens nach Anspruch 5 ausführt.

**Revendications**

1. Procédé de génération de signature numérique pour une entité de transmission, comprenant :

   diviser un message à transmettre en une première partie (N) et en une seconde partie (V) ;
   générer un secret éphémère, k, et une clé éphémère, Q, correspondante ;
   calculer une clé de chiffrement ($K_e$) sur la base de la clé éphémère (Q) générée et d'une clé publique de l'entité de transmission, $P_A$, par l'équation :

   $$K_e = KDF(Q-x_Q P_A),$$

   où KDF est une fonction de calcul de clé et $x_Q$ est une conversion en nombre entier de la coordonnée x de la clé publique éphémère Q ;
   calculer un cryptogramme (c) par chiffrement de la première partie (N) du message à l'aide de la clé de chiffrement ($K_e$) calculée ;
   calculer une valeur de hachage (h) par application d'une première fonction de hachage à une concaténation d'une valeur de hachage d'identité ($Z_A$), du cryptogramme (c) calculé et de la seconde partie (V) du message ;
   calculer une clé de signature s par l'équation :

   $$s = (1 + d_A)^{-1}(k-r \cdot d_A) \bmod n$$

   où $d_A$ est la clé privée de l'entité de transmission, n est l'ordre du point de base de la courbe elliptique, et r est une première composante de signature calculée par l'équation :

   $$r = e + x_Q \bmod n$$

   où e est une valeur entière calculée à partir de la valeur de hachage h ; et
   délivrer un message chiffré qui comprend la clé de signature (s) calculée, le cryptogramme (c) calculé et la seconde partie (V) du message.

2. Procédé de génération de signature numérique selon la revendication 1, comprenant en outre :
   calculer la valeur de hachage d'identité par

   formation d'une chaîne à deux octets d'un identificateur de distinction ;
   formation d'une chaîne d'octets de l'identificateur de distinction, de la clé publique et d'un ensemble de paramètres de courbe elliptique ; et
   calcul de la valeur de hachage d'identité par application d'une seconde fonction de hachage à la chaîne d'octets.

3. Procédé de génération de signature numérique selon la revendication 1, dans lequel l'étape de calcul du cryptogramme, c, comprend le calcul de c par l'équation :

   $$c=E(N, K_e),$$

   où E est une technique de chiffrement, N est la première partie du message à transmettre et $K_e$ est la clé de chiffrement.

4. Procédé de génération de signature numérique selon la revendication 1, dans lequel l'étape de calcul de la valeur de hachage, h, comprend le calcul de h par l'équation :

$$h = \text{Hachage}(Z_A \| c \| V),$$

où $Z_A$ est la valeur de hachage d'identité, c est le cryptogramme, V est la seconde partie du message à transmettre, et Hachage est la première fonction de hachage.

5. Procédé de vérification de signature numérique pour une entité de réception, comprenant :

recevoir un message chiffré qui comprend une clé de signature (s), un cryptogramme (c) et une seconde partie (V) d'un message ;
calculer une valeur de hachage (h) par application d'une première fonction de hachage à une concaténation d'une valeur de hachage d'identité ($Z_A$), du cryptogramme (c) reçu et de la seconde partie (V) reçue du message ;
calculer une clé éphémère (Q') sur la base d'une clé publique ($P_A$), de la clé de signature (s) reçue et de la valeur de hachage (h) calculée par l'équation :

$$Q' = sG + (e + s) P_A,$$

où s est la clé de signature, $P_A$ est la clé publique, e est la valeur de hachage exprimée sous la forme d'un nombre entier, et G est un point de base d'une courbe elliptique ;
calculer une clé de déchiffrement ($K_e'$) sur la base de la clé éphémère (Q') calculée ;
calculer une première partie (N') du message par déchiffrement du cryptogramme (c) reçu à l'aide de la clé de déchiffrement ($K_e'$) calculée ; et
vérifier que la première partie calculée du message a une redondance nécessaire pour vérifier le message.

6. Procédé de vérification de signature numérique selon la revendication 5, dans lequel l'étape de calcul de la clé de déchiffrement, $K_e'$, comprend le calcul de la clé de déchiffrement par l'équation :

$$K_e' = \text{KDF}(Q'),$$

où KDF est une fonction de calcul de clé et Q' est la clé éphémère.

7. Procédé de vérification de signature numérique selon la revendication 5, dans lequel l'étape de calcul de la première partie du message, N', comprend le calcul de la première partie par l'équation :

$$N' = E^{-1}(c, K_e'),$$

où c est le cryptogramme reçu, $K_e'$ est la clé de déchiffrement calculée, et $E^{-1}$ est une technique de déchiffrement.

8. Appareil de génération de signature numérique, comprenant :
un processeur configuré pour :

diviser un message à transmettre en une première partie (N) et en une seconde partie (V) ;
générer un secret éphémère, k, et une clé éphémère, Q, correspondante ;
calculer une clé de chiffrement ($K_e$) sur la base de la clé éphémère (Q) générée et d'une clé publique de l'entité de transmission, $P_A$, par l'équation : $K_e = \text{KDF}(Q - x_Q P_A)$, où KDF est une fonction de calcul de clé et $x_Q$ est une conversion en nombre entier de la coordonnée x de la clé publique éphémère Q ;
calculer un cryptogramme (c) par chiffrement de la première partie (N) du message à l'aide de la clé de chiffrement ($K_e$) calculée ;
calculer une valeur de hachage (h) par application d'une première fonction de hachage à une concaténation d'une valeur de hachage d'identité ($Z_A$), du cryptogramme (c) calculé et de la seconde partie (V) du message ;
calculer une clé de signature s par l'équation :

$$s = (1 + d_A)^{-1}(k-r \cdot d_A) \bmod n$$

où $d_A$ est la clé privée de l'entité de transmission, n est l'ordre du point de base de la courbe elliptique, et r est une première composante de signature calculée par l'équation :

$$r = e + x_Q \bmod n$$

où e est une valeur entière calculée à partir de la valeur de hachage h ; et

délivrer un message chiffré qui comprend la clé de signature (s) calculée, le cryptogramme (c) calculé et la seconde partie (V) du message.

9. Appareil de vérification de signature numérique, comprenant :
un processeur configuré pour :

recevoir un message chiffré qui comprend une clé de signature s, un cryptogramme (c), et une seconde partie (V) d'un message ;

calculer une valeur de hachage (h) par application d'une première fonction de hachage à une concaténation d'une valeur de hachage d'identité ($Z_A$), du cryptogramme (c) reçu et de la seconde partie (V) reçue du message ;

calculer une clé éphémère (Q') sur la base d'une clé publique ($P_A$), de la clé de signature (s) reçue et de la valeur de hachage (h) calculée par l'équation :

$$Q' = sG + (e + s) \; P_A,$$

où s est la clé de signature, $P_A$ est la clé publique, e est la valeur de hachage exprimée sous la forme d'un nombre entier, et G est un point de base d'une courbe elliptique ;

calculer une clé de déchiffrement ($K_e$') sur la base de la clé éphémère (Q') calculée ;

calculer une première partie (N') du message par déchiffrement du cryptogramme (c) reçu à l'aide de la clé de déchiffrement ($K_e$') calculée ; et

vérifier que la première partie calculée du message a une redondance nécessaire pour vérifier le message.

10. Support lisible par ordinateur ayant, stocké sur celui-ci, un programme qui, lorsqu'il est exécuté par un ordinateur, amène l'ordinateur à exécuter les étapes du procédé selon la revendication 1.

11. Support lisible par ordinateur ayant, stocké sur celui-ci, un programme qui, lorsqu'il est exécuté par un ordinateur, amène l'ordinateur à exécuter les étapes du procédé selon la revendication 5.

**FIG. 1**

EP 2 951 949 B1

INPUT: a, b, G = $(x_G, y_G)$,
: $ID_A$ of byte length $entlen_A$
: $P_A = (x_A, y_A)$     S 201

Compute $ENTL_A$     S 203

Compute $T = ENTL_A \parallel ID_A \parallel a \parallel b \parallel x_G \parallel y_G \parallel x_A \parallel y_A$     S 205

$Z_A = H_{256}(T)$     S 207

END     S 209

# FIG. 2

INPUT: $d_A$, $M = N \parallel V$, $Z_A$ — S 301

Generate ephemeral key pair (k,Q) — S 303

Compute $x_Q$ — S 305

Construct $K_e = KDF (Q - x_Q P_A)$ — S 307

Compute $c = E(N, K_e)$ — S 309

Compute $h = HASH (Z_A \parallel c \parallel V)$ — S 311

Convert h to integer e — S 313

Compute $r = e + x_Q \bmod n$ — S 315

$r = 0$ ? — S 317
Y    N

$r + k = n$ ? — S 319
Y    N

$s = (1 + d_A)^{-1} (k - r.d_A) \bmod n$ — S 321

$s = 0$ ? — S 323
Y    N

S 325 — OUTPUT: $s$, $c \parallel v$ → END — S 327

## FIG. 3

INPUT: Singed message s, c || V
Public Key $P_A$
Identity Hash $Z_A$
S 401

Compute h = HASH $(Z_A|| c || V)$ — S 403

Convert h to integer e — S 405

Compute Q' = SG + (e+s) $P_A$ — S 407

Compute $K_e$' = KDF (Q') — S 409

Compute N' = $E^{-1}$(c, $K_e$') — S 411

S 413 — N' contains redundancy?

N → Declare N' INVALID — S 417

RETURN NULL — S 419

Y → Declare N' VALID — S 415

END — S 421

# FIG. 4

**FIG. 5**

Computer

Display 510 — Display Controller 508 — BUS 526

Speakers 522 — Sound Controller 520 — BUS 526

Disk 504 — Storage Controller 524 — BUS 526

BUS 526 — Network Controller 506

BUS 526 — Memory 502

BUS 526 — CPU 500

BUS 526 — I/O Interface 512

I/O Interface 512 — Peripherals 518

I/O Interface 512 — Touch Screen 516

I/O Interface 512 — Keyboard Mouse 514

Network Controller 506 — Network 109

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009030021 A